# FASCICULE DE BREVET EUROPEEN

(11) **EP 4 355 604 B1**
(45) Date de publication et mention de la délivrance du brevet: **23.07.2025**
(21) Numéro de dépôt: 22731730.2
(22) Date de dépôt: 13.05.2022
(51) Int. Cl.: B60H 1/00, B60K 35/00, B60K 35/10, B60K 35/21, B60K 35/22, B60K 35/28

(54) **PROCÉDÉ ET DISPOSITIF DE CONTRÔLE D'UN SYSTÈME DE CLIMATISATION D'UN VÉHICULE**
VERFAHREN UND VORRICHTUNG ZUR STEUERUNG EINER FAHRZEUGKLIMAANLAGE
METHOD AND DEVICE FOR CONTROLLING A VEHICLE AIR CONDITIONING SYSTEM

(30) Priorité: 18.06.2021 FR 2106472
(43) Date de publication de la demande: 24.04.2024
(73) Titulaire: Stellantis Auto SAS, 78300 Poissy (FR)
(72) Inventeur: PEULMEULE, Valentin, 59800 LILLE (FR); DUQUEROY, Michael, 91430 VAUHALLAN (FR); BONTEMPS, Alexandra, 91440 BURES SUR YVETTE (FR)
(74) Mandataire: ESIP
(86) Numéro de dépôt international: PCT/FR2022/050917
(87) Numéro de publication internationale: WO 2022/263736

(56) Documents cités:
- DE-A1- 102008 035 457
- DE-A1- 102013 009 603
- FR-A3- 2 909 599
- US-A1- 2006 092 130

## Description

La présente invention revendique la priorité de la demande française 2106472 déposée le 18.06.2021.

### Domaine technique

La présente invention concerne les procédés et dispositifs de contrôle d'un système de climatisation d'un véhicule, notamment d'un véhicule autonome. La présente invention concerne aussi un système de climatisation d'un véhicule et un véhicule.

### Arrière-plan technologique

Les véhicules contemporains embarquent des systèmes de climatisation qui permettent de climatiser les habitacles de ces véhicules, parfois par zone. Un système de climatisation, considéré par la suite, est à prendre au sens large c'est-à-dire qu'il comprend un ensemble de contrôles tous en rapport avec le confort des usagers du véhicule se trouvant dans l'habitacle de ce véhicule. Des contrôles d'un système de climatisation peuvent être, par exemple, une sélection d'une consigne de température de l'air d'un habitacle du véhicule, une sélection d'un niveau de puissance d'une climatisation automatique de l'air de l'habitacle du véhicule, une activation/désactivation de la climatisation automatique, une activation/désactivation d'un dégivrage d'un parebrise avant et/ou arrière du véhicule, une activation/désactivation d'un recyclage de l'air intérieur de l'habitacle du véhicule sans apport d'air extérieur, une sélection d'une zone de ventilation à l'intérieur de l'habitacle du véhicule ou encore une sélection d'un niveau puissance de ventilation de l'air de l'habitacle du véhicule.

Il est connu des solutions de contrôle de système de climatisation qui sont qualifiées de physiques, de tactiles ou d'hybrides.

On connait du document DE 10 2013 009603 A1 un dispositif de contrôle d'un système de climatisation d'un véhicule, comprenant une surface d'entrée et d'affichage du système de climatisation comprenant plusieurs zones de sélection de contrôle par contact, chaque zone de sélection de contrôle étant associée à un contrôle du système de climatisation, la surface d'entrée et d'affichage étant configurée pour afficher une information relative à un contrôle du système de climatisation sélectionné par contact sur l'une des zones de sélection de contrôle, et une molette montée en rotation autour de la surface d'entrée et d'affichage et configuré pour qu'une rotation de la molette autour de la surface d'entrée et d'affichage modifie l'information relative au contrôle du système de climatisation sélectionné, ladite information modifiée étant affichée sur la surface d'entrée et d'affichage.

Les solutions physiques sont historiquement les premières à avoir été utilisées dans l'automobile. Ces solutions proposent d'utiliser des boutons pour contrôler un système de climatisation. Si l'ergonomie de ces solutions était acceptable, leur utilisation dans les véhicules contemporains n'est plus raisonnable de part le nombre toujours plus important de contrôles d'un système de climatisation. L'utilisation de multiples boutons sur une façade du système de climatisation positionnée sur la planche de bord du véhicule ne peut plus être envisagée à cause du volume et de la complexité de plus en plus importants de ces façades.

Les solutions tactiles ne sont utilisées que depuis peu dans l'automobile. Ces solutions proposent d'utiliser un écran principal tactile positionné sur la planche de bord du véhicule qui permet d'avoir un retour rapide d'informations pour les usagers sous une forme visuelle. Toutefois, ces solutions tactiles ne sont pas très ergonomiques comparées aux solutions physiques car il est souvent plus difficile de contrôler en aveugle un système de climatisation à partir d'un écran tactile que de le contrôler avec des boutons (solution physique). Par ailleurs la navigation sur écran tactile n'est pas toujours intuitive et la modification d'un contrôle du système de climatisation implique, très souvent, de devoir quitter un autre système en cours de visualisation sur l'écran tactile tel qu'un système d'aide à la navigation ou un système d'écoute de musique. Récemment, des solutions hybrides sont apparues dans l'automobile. Ces solutions allient à la fois les avantages d'un écran principal tactile (retour visuel rapide d'informations pour les usagers en fonction de leur interactions avec le système de climatisation) et les avantages des solutions physiques en soit figeant certaines zones de l'écran tactile qui sont alors dédiées à être utilisées comme des boutons d'une solution physique, soit d'associer un ensemble de boutons externes à l'écran tactile.

Ces zones figées ou ces boutons externes permettent, par exemple, d'afficher des ensembles d'informations relatifs à des contrôles particuliers du système de climatisation par des actions simples sur ces zones ou boutons. L'une de ces zones ou boutons peut être configuré pour pouvoir revenir à un système d'aide à la navigation ou un système d'écoute de musique ou à tout autre système dont des informations étaient préalablement affichées sur l'écran principal.

Les solutions hybrides semblent donc répondre à la problématique de la multitude de contrôles d'un système de climatisation. Toutefois, ces solutions requièrent l'utilisation d'un écran principal de dimension relativement importante qui tend à disparaître à l'avenir dans les futurs véhicules.

Un problème se pose alors de définir une solution pour contrôler un système de climatisation au contrôles toujours plus nombreux, à leur accès rapide et intuitif sans pour autant utiliser un écran principal de dimension importante et positionné sur la planche de bord d'un véhicule.

### Résumé de la présente invention

Un objet de la présente invention est de définir une solution pour contrôler un système de climatisation d'un véhicule sans pour autant utiliser un écran principal de dimension importante et positionné sur la planche de bord du véhicule.

Un autre objet de la présente invention est de rendre simple et intuitif l'accès aux contrôles toujours plus nombreux d'un système de climatisation.

Un autre objet de la présente invention est d'améliorer le confort des usagers d'un véhicule.

Selon un premier aspect, la présente invention concerne un dispositif de contrôle d'un système de climatisation d'un véhicule, comprenant un sélecteur de contrôle du système de climatisation comprenant plusieurs zones de sélection de contrôle par pression, chaque zone de sélection de contrôle étant associée à un contrôle du système de climatisation ; un écran numérique configuré pour afficher une information relative à un contrôle du système de climatisation sélectionné par pression sur l'une des zones de sélection de contrôle du sélecteur de contrôle ; une molette montée en rotation autour du sélecteur de contrôle pour qu'une rotation de la molette autour du sélecteur de contrôle modifie une information relative à un contrôle du système de climatisation sélectionné, ladite information modifiée étant affichée sur l'écran.

Selon un exemple de réalisation particulier et non limitatif, le sélecteur de contrôle, la molette et l'écran ont la forme d'anneaux circulaires et le sélecteur de contrôle, la molette et l'écran sont assemblés suivant un même axe passant par des centres desdits anneaux circulaires.

Selon un exemple de réalisation particulier et non limitatif, un diamètre extérieur de la molette est supérieur à un diamètre extérieur du sélecteur de contrôle, et le diamètre extérieur du sélecteur de contrôle est supérieur à un diamètre extérieur de l'écran.

Selon un exemple de réalisation particulier et non limitatif, l'écran est un écran à cristaux liquides.

Selon un exemple de réalisation particulier et non limitatif, un contrôle du système de climatisation est un des contrôles suivants :
- une sélection d'une consigne de température de l'air d'un habitacle du véhicule;
- une sélection d'un niveau de puissance d'une climatisation automatique de l'air de l'habitacle du véhicule mise en œuvre par le système de climatisation du véhicule ;
- une activation/désactivation de la climatisation automatique ;
- une activation/désactivation d'un dégivrage d'un parebrise arrière du véhicule ;
- une activation/désactivation d'un recyclage de l'air intérieur de l'habitacle du véhicule sans apport d'air extérieur ;
- une activation/désactivation d'un dégivrage d'un parebrise avant du véhicule ;
- une sélection d'une zone de ventilation à l'intérieur de l'habitacle du véhicule ;
- une sélection d'un niveau de puissance de ventilation de l'air de l'habitacle du véhicule.

Selon un exemple de réalisation particulier et non limitatif, un indicateur lumineux est associé à chaque zone de sélection de contrôle du sélecteur de contrôle pour indiquer si un contrôle associé à ladite zone de sélection de contrôle est sélectionné.

Selon un exemple de réalisation particulier et non limitatif, plusieurs informations relatives à plusieurs contrôles sont affichées simultanément sur l'écran.

Selon un deuxième aspect, la présente invention concerne un système de climatisation d'un véhicule comprenant un dispositif selon le premier aspect de la présente invention.

Selon un troisième aspect, la présente invention concerne un procédé de contrôle d'un système de climatisation d'un véhicule mis en œuvre par un dispositif selon le premier aspect de la présente invention, comprenant une étape de sélection d'un contrôle du système de climatisation par pression sur une zone de sélection de contrôle du sélecteur de contrôle ; une étape de modification d'une information relative à un contrôle du système de climatisation sélectionné, par rotation de la molette montée en rotation autour du sélecteur de contrôle ; et une étape d'affichage de ladite information modifiée sur l'écran.

Selon un quatrième aspect, la présente invention concerne un véhicule comprenant le dispositif selon le premier aspect de la présente invention.

### Brève description des figures

D'autres caractéristiques et avantages de la présente invention ressortiront de la description des exemples de réalisation particuliers et non limitatifs de la présente invention ci-après, en référence aux figures 1 à 8 annexées, sur lesquelles :
[Fig. 1] illustre schématiquement une vue de l'intérieur de la partie avant d'un habitacle d'un véhicule, selon un exemple de réalisation particulier et non limitatif de la présente invention ;
[Fig. 2] illustre schématiquement une vue éclatée d'un dispositif de contrôle d'un système de climatisation, selon un exemple de réalisation particulier et non limitatif de la présente invention ;
[Fig. 3] illustre schématiquement un exemple de contrôle d'un système de climatisation par le dispositif de la figure 2, selon un exemple de réalisation particulier et non limitatif de la présente invention ;
[Fig. 4] illustre schématiquement un exemple de contrôle d'un système de climatisation par le dispositif de la figure 2, selon un exemple de réalisation particulier et non limitatif de la présente invention ;
[Fig. 5] illustre schématiquement un exemple de contrôle d'un système de climatisation par le dispositif de la figure 2, selon un exemple de réalisation particulier et non limitatif de la présente invention ;
[Fig. 6] illustre schématiquement un exemple de contrôle d'un système de climatisation par le dispositif de la figure 2, selon un exemple de réalisation particulier et non limitatif de la présente invention ;
[Fig. 7] illustre schématiquement une variante du dispositif de la figure 2, selon un exemple de réalisation particulier et non limitatif de la présente invention ; et
[Fig. 8] illustre un organigramme des différentes étapes d'un procédé de contrôle d'un système de climatisation mis en œuvre par le dispositif 100 de la figure 2, selon un exemple de réalisation particulier et non limitatif de la présente invention.

### Description des exemples de réalisation

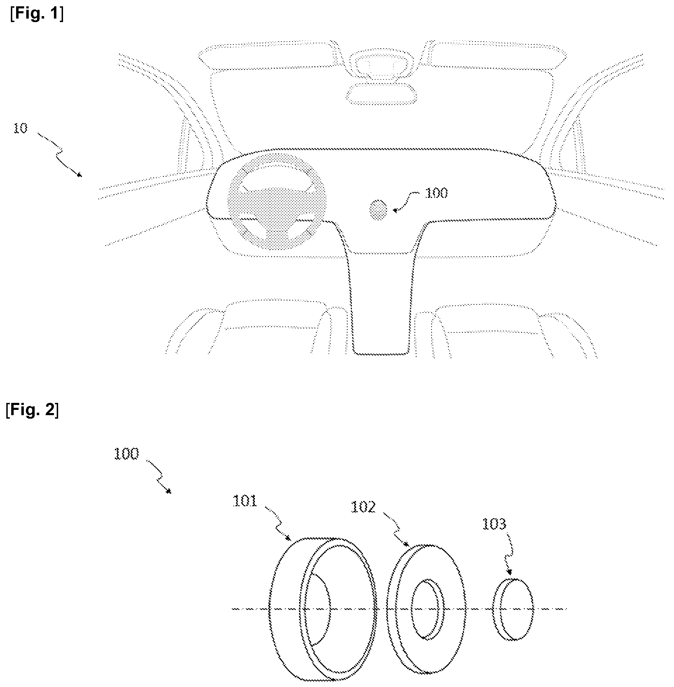

Un procédé et un dispositif de contrôle d'un système de climatisation vont maintenant être décrits dans ce qui va suivre en référence conjointement aux figures 1 à 8. Des mêmes éléments sont identifiés avec des mêmes signes de référence tout au long de la description qui va suivre.

Selon un exemple particulier et non limitatif de réalisation de la présente invention, un dispositif de contrôle d'un système de climatisation d'un véhicule comprend un sélecteur de contrôle du système de climatisation comprenant plusieurs zones de sélection de contrôle par pression, chaque zone de sélection de contrôle étant associée à un contrôle du système de climatisation ; un écran numérique configuré pour afficher une information relative à un contrôle du système de climatisation sélectionné par pression sur l'une des zones de sélection de contrôle du sélecteur de contrôle ; une molette montée en rotation autour du sélecteur de contrôle pour qu'une rotation de la molette autour du sélecteur de contrôle modifie une information relative à un contrôle du système de climatisation sélectionné ; ladite information modifiée étant affichée sur l'écran.

Le dispositif de contrôle comprend un écran de taille réduire et est indépendant de tout écran principal habituellement positionné sur la planche de bord d'un véhicule. Le sélecteur de contrôle permet à un usager de sélectionner facilement et éventuellement en aveugle un contrôle du système de climatisation par simple pression sur une zone de sélection de contrôle de ce sélecteur de contrôle. La molette permet de modifier un contrôle sélectionné et l'écran assure un retour visuel à un usager d'une information modifiée relative à un contrôle sélectionné par une rotation de la molette. Le dispositif permet un accès rapide au contrôle d'un système de climatisation de manière intuitive pour un usager. Par ailleurs, le sélecteur de contrôle requiert un emplacement restreint comparé à celui requit par des boutons car les zones de sélection de contrôle du sélecteur de contrôle n'ont pas besoin d'être étendues en surface pour être accessibles. Par ailleurs, l'écran qui n'a pour rôle que d'afficher un retour d'informations relatives à des contrôles n'a pas besoin d'avoir une surface étendue. D'où un encombrement réduit du dispositif dans son ensemble comparé aux façades de système de climatisation actuels utilisant un ensemble de boutons, un écran principal ou une combinaison d'un écran principal et de boutons.

[Fig. 1] illustre schématiquement une vue de l'intérieur de la partie avant d'un habitacle d'un véhicule 10, selon un exemple de réalisation particulier et non limitatif de la présente invention.

La partie avant de l'habitacle du véhicule 10 comprend notamment un volant, un tableau de bord, un pare-brise et un dispositif 100 de contrôle d'un système de climatisation selon la présente invention positionné, par exemple sur la partie centrale de la planche de bord du tableau de bord.

Le véhicule 10 correspond par exemple à un véhicule à moteur thermique, à moteur(s) électrique(s) ou encore à un véhicule hybride avec un moteur thermique et à un ou plusieurs moteurs électriques. Le véhicule 10 correspond ainsi par exemple à un véhicule terrestre, par exemple une automobile, un camion, un car, un tramway, un train, etc.

Le système de climatisation comprend des actionneurs (non représentés) connectés à un dispositif de commande (non représenté). Le dispositif de commande est connecté au dispositif 100. Des actionneurs peuvent être des mécanismes d'ouverture/fermeture de bouches d'aération, des ventilateurs, des filaments électriques fixés sur un parebrise et prévus pour chauffer lorsqu'ils sont alimentés en électricité, ou tout autre mécanisme utilisé pour la mise en œuvre d'un système de climatisation.

Des exemples du dispositif de commande comprennent, sans y être limités, un équipement électronique embarqué tel qu'un ordinateur de bord du véhicule 10, ou un calculateur électronique tel qu'une UCE (« Unité de Commande Electronique »). Les éléments du dispositif de commande, individuellement ou en combinaison, peuvent être intégrés dans un unique circuit intégré, dans plusieurs circuits intégrés, et/ou dans des composants discrets. Le dispositif de commande peut être réalisé sous la forme de circuits électroniques ou de modules logiciels (ou informatiques) ou encore d'une combinaison de circuits électroniques et de modules logiciels.

Le dispositif de commande comprend un (ou plusieurs) processeur(s) configurés pour exécuter des instructions pour la réalisation d'étapes de procédés prenant en entrée des commandes en provenance du dispositif 100. Le processeur peut inclure de la mémoire intégrée, une interface d'entrée/sortie, et différents circuits connus de l'homme du métier. Le dispositif de commande comprend en outre au moins une mémoire correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire du dispositif de commande.

Selon un exemple de réalisation particulier et non limitatif, le dispositif de commande comprend une interface de communication qui permet d'établir une communication avec d'autres dispositifs (tels que d'autres calculateurs) via un canal de communication. L'interface de communication correspond par exemple à un transmetteur configuré pour transmettre et recevoir des informations et/ou des données via un canal de communication. L'interface de communication correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

[Fig. 2] illustre schématiquement une vue éclatée du dispositif 100 de contrôle d'un système de climatisation, selon un exemple de réalisation particulier et non limitatif de la présente invention.

Le dispositif 100 comprend un sélecteur de contrôle 102 du système de climatisation qui comprend plusieurs zones Z_{c} de sélection de contrôle par pression, chaque zone Z_{c} étant associée à un contrôle du système de climatisation. Le dispositif 100 comprend également un écran numérique 103 configuré pour afficher une information Inf_{c} relative à un contrôle du système de climatisation sélectionné par pression sur l'une des zones de sélection de contrôle Z_{c} du sélecteur de 102. Le dispositif 100 comprend aussi une molette 101 montée en rotation autour du sélecteur de contrôle 102. Une pression d'un doigt d'un usager du véhicule 10 sur une zone Z_{c} est un exemple de pression sur cette zone. La molette 101 est assemblée en rotation autour du sélecteur de contrôle 102 pour qu'une rotation de la molette 101 autour du sélecteur de contrôle 102 modifie une information Inf_{c} relative à un contrôle du système de climatisation sélectionné, ladite information Inf_{c} modifiée étant alors affichée sur l'écran 103.

Selon un exemple de réalisation particulier et non limitatif, illustré à la figure 2, le sélecteur de contrôle 102, la molette 101 et l'écran 103 ont la forme d'anneaux circulaires et le sélecteur de contrôle 102, la molette 101 et l'écran 103 sont assemblés suivant un même axe passant par les centres de ces anneaux circulaires.

Cet exemple est avantageux car la forme circulaire de la molette 101 permet une prise en main facile pour un usager souhaitant actionner cette molette en rotation.

Selon une variante de cet exemple, illustrée à la figure 2, un diamètre extérieur de la molette 101 est supérieur à un diamètre extérieur du sélecteur de contrôle 102, et le diamètre extérieur du sélecteur de contrôle 102 est supérieur à un diamètre extérieur de l'écran 103.

Par exemple le diamètre extérieur du sélecteur de contrôle 102 est de 80 millimètres et le diamètre extérieur de chaque zone Z_{c} est de 20 millimètres.

Cette variante permet de positionner l'écran 103 au centre du dispositif 100 et de positionner les zones Z_{c} sur le pourtour de l'écran 103. Cette configuration du dispositif 100 permet un accès particulier ergonomique, intuitif et simple d'utilisation.

Selon un exemple de réalisation particulier et non limitatif, l'écran 103 est un écran à cristaux liquides ou LCD (de l'anglais « Liquid Crystal Display ») qui permet la création d'écrans plats à faible consommation d'électricité.

Selon une variante, l'écran est de type TFT-LCD (de l'anglais « Thin-Film-Transistor Liquid Crystal Display, en français « écran à cristaux liquides de type à transistor à films fins »).

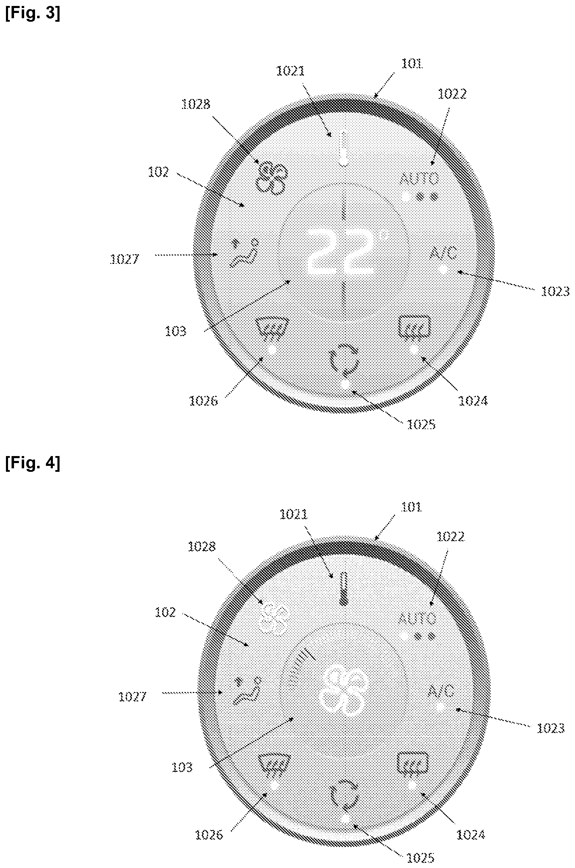

Selon des exemples de réalisation particuliers et non limitatifs, illustrés par les figures 3 à 7, les zones Z_{c} sont réparties sur la périphérie du sélecteur de contrôle 102 alors en forme d'anneau circulaire. Chacune de ces zones Z_{c} est associée à un contrôle du système de climatisation qui est sélectionné par pression sur la zone Z_{c} correspondante.

Selon un exemple de réalisation particulier et non limitatif, un indicateur lumineux est associé à chaque zone Z_{c} du sélecteur de contrôle 102 pour indiquer si un contrôle associé à ladite zone Z_{c} est sélectionné.

Selon une variante, un indicateur lumineux est une diode électroluminescente (de l'anglais « Light-Emitting Diode »).

Selon une autre variante, l'indicateur lumineux associé à une zone Z_{c} associée à un contrôle sélectionné est un rétro-éclairage de ladite zone Z_{c}.

Selon un exemple de réalisation particulier et non limitatif, illustré par les figures 3 à 8, une première zone Z_{c}, référencée 1021, du sélecteur de contrôle 102 est associée à une sélection d'une consigne de température de l'air de l'habitacle du véhicule 10.

Une deuxième zone Z_{c}, référencée 1022, du sélecteur de contrôle 102 est associée à une sélection d'un niveau de puissance d'une climatisation automatique de l'air de l'habitacle du véhicule 10 mise en œuvre par le système de climatisation.

Une troisième zone Z_{c}, référencée 1023, du sélecteur de contrôle 102 est associée à une activation/désactivation de la climatisation automatique de l'air de l'habitacle du véhicule 10.

Une quatrième zone Z_{c}, référencée 1024, du sélecteur de contrôle 102 est associée à une activation/désactivation d'un dégivrage du parebrise arrière du véhicule 10.

Une cinquième zone Z_{c}, référencée 1025, du sélecteur de contrôle 102 est associée à une activation/désactivation d'un recyclage de l'air intérieur de l'habitacle du véhicule sans apport d'air extérieur.

Une sixième zone Z_{c}, référencée 1026, du sélecteur de contrôle est associée à une activation/désactivation d'un dégivrage du parebrise avant du véhicule 10.

Une septième zone Z_{c}, référencée 1027, du sélecteur de contrôle est associée à la sélection d'une zone de ventilation à l'intérieur de l'habitacle du véhicule 10.

Une huitième zone Z_{c}, référencée 1028, du sélecteur de contrôle est associée à une sélection d'un niveau puissance de ventilation de l'air de l'habitacle du véhicule 10.

Cette liste de contrôles d'un système de ventilation du véhicule 10 n'est pas exhaustive et la présente invention s'étend à tout contrôle qui est en rapport avec le confort des usagers du véhicule se trouvant dans l'habitacle de ce véhicule 10.

Selon un exemple de réalisation particulier et non limitatif, plusieurs informations relatives à plusieurs contrôles sont affichées simultanément sur l'écran.

[Fig. 3] illustre schématiquement un exemple de contrôle d'un système de climatisation par le dispositif de la figure 2, selon un exemple de réalisation particulier et non limitatif de la présente invention.

Selon cet exemple, la zone 1023 a subi une pression pour activer la climatisation automatique de l'air de l'habitacle du véhicule 10. Une diode électroluminescence associée à la zone 1023 est allumée pour indiquer que la climatisation automatique est activée. La zone 1022 a aussi subi une pression pour sélectionner un niveau de puissance de la climatisation automatique activée. Une diode électroluminescente d'un ensemble de diodes (trois selon l'exemple), est allumée pour indiquer un niveau particulier de puissance de la climatisation automatique activée. La zone 1024, respectivement 1026, a aussi subi une pression pour activer un dégivrage du parebrise arrière, respectivement avant, du véhicule 10. Une diode électroluminescence associée à la zone 1024, respectivement 1026, est allumée pour indiquer qu'un dégivrage du parebrise arrière, respectivement avant, du véhicule 10 est activé. La zone 1021 est la dernière des zones Z_{c} à avoir subi une pression pour sélectionner une consigne de température de l'air de l'habitacle du véhicule 10. Un indicateur lumineux associé à la zone 1021 s'illumine alors, ici le symbole de température est rétroéclairé pour indiquer qu'une consigne de température a été sélectionnée. Comme cette zone 1021 est la dernière à avoir subi une pression, la sélection d'une consigne de température est considérée comme étant le dernier contrôle sélectionné et une consigne de température (ici 22 degrés) est affichée sur l'écran 103. Cette consigne de température peut être modifiée en tournant la molette 101 soit dans le sens horaire soit anti-horaire. La consigne de température ainsi modifiée est affichée sur l'écran 103.

[Fig. 4] illustre schématiquement un exemple de contrôle d'un système de climatisation par le dispositif de la figure 2, selon un exemple de réalisation particulier et non limitatif de la présente invention.

Selon cet exemple, la dernière zone Z_{c} à avoir subi une pression est la zone 1028 pour sélectionner un niveau puissance de ventilation de l'air de l'habitacle du véhicule 10. Un indicateur lumineux associé à la zone 1028 s'illumine alors, ici le symbole d'un ventilateur est rétroéclairé pour indiquer qu'un niveau de puissance de ventilation a été sélectionné. Comme cette zone 1028 est la dernière à avoir subi une pression, la sélection d'un niveau de puissance de ventilation est considérée comme étant le dernier contrôle sélectionné et un niveau de puissance de ventilation est affiché sur l'écran 103.

Ce niveau est ici représenté, à titre d'exemple, par une graduation sur la périphérie de l'écran 103.

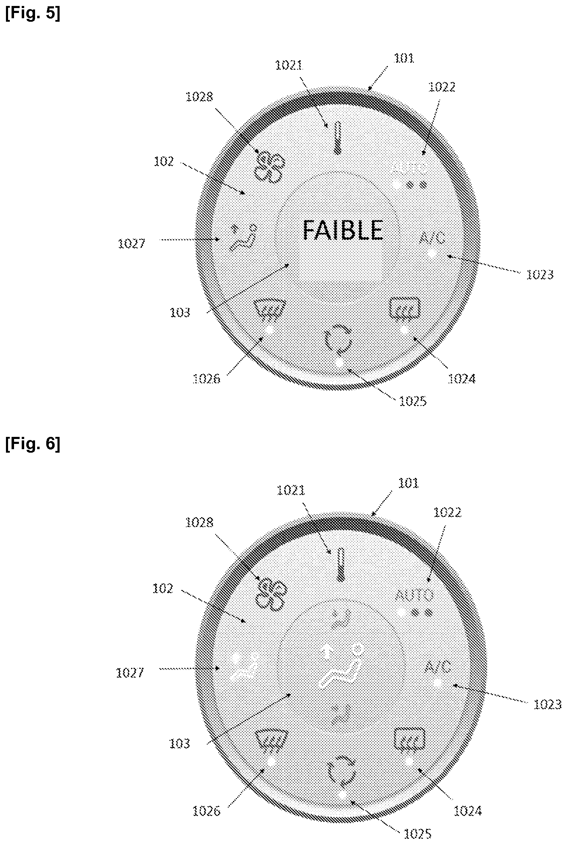

[Fig. 5] illustre schématiquement un exemple de contrôle d'un système de climatisation par le dispositif de la figure 2, selon un exemple de réalisation particulier et non limitatif de la présente invention.

Selon cet exemple, la dernière zone Z_{c} à avoir subi une pression est la zone 1022 pour sélectionner un niveau de puissance de la climatisation automatique de l'air de l'habitacle du véhicule 10 mis en œuvre par le système de climatisation. La diode électroluminescente de l'ensemble de trois diodes est allumée pour indiquer qu'un niveau FAIBLE, NORMAL ou ELEVE de puissance de la climatisation automatique activée a été sélectionné. Comme cette zone 1028 est la dernière à avoir subi une pression, la sélection du niveau de puissance de la climatisation automatique est considérée comme étant le dernier contrôle sélectionné et le niveau de puissance de la climatisation automatique, ici FAIBLE, est affiché sur l'écran 103.

[Fig. 6] illustre schématiquement un exemple de contrôle d'un système de climatisation par le dispositif de la figure 2, selon un exemple de réalisation particulier et non limitatif de la présente invention.

Selon cet exemple, la dernière zone Z_{c} à avoir subi une pression est la zone 1027 pour sélectionner une zone de ventilation à l'intérieur de l'habitacle du véhicule 10. Un indicateur lumineux associé à la zone 1027 s'illumine alors, ici le symbole d'une personne assise, est rétroéclairé pour indiquer qu'une zone de ventilation a été sélectionnée. Comme cette zone 1027 est la dernière à avoir subi une pression, la sélection d'une zone de ventilation est considérée comme étant le dernier contrôle sélectionné et une représentation de la zone de ventilation sélectionné est affichée sur l'écran 103.

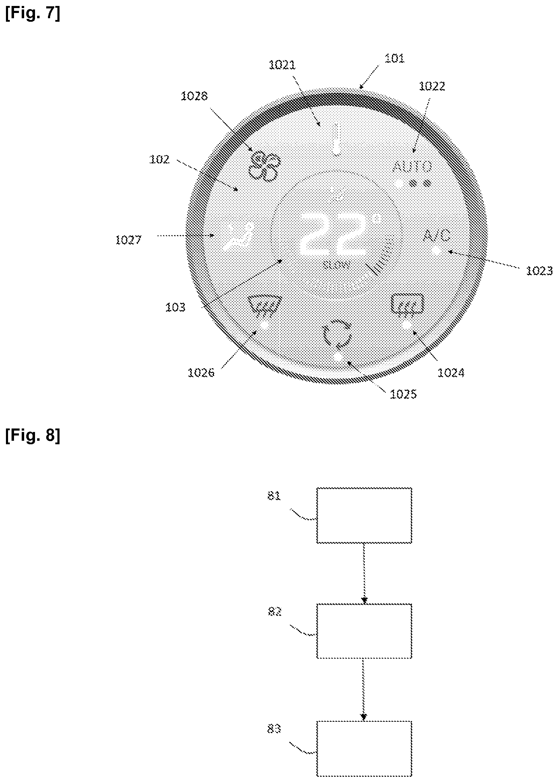

[Fig. 7] illustre schématiquement une variante du dispositif de la figure 2, selon un exemple de réalisation particulier et non limitatif de la présente invention.

Selon cette variante, les zones 1021 à 1027 ont subi des pressions et l'écran 103 affiche plusieurs informations relatives aux contrôles associées à ces zones Z_{c}. Selon l'exemple, une consigne de température, un niveau de puissance de ventilation, une zone de ventilation et un niveau de puissance de la climatisation automatique sont affichés simultanément sur l'écran 103.

[Fig. 8] illustre un organigramme des différentes étapes d'un procédé de contrôle d'un système de climatisation mis en œuvre par le dispositif 100 de la figure 2, selon un exemple de réalisation particulier et non limitatif de la présente invention.

Dans une étape 81, un contrôle du système de climatisation est sélectionné par pression sur une zone Z_{c} du sélecteur de contrôle 102.

Dans une étape 82, une information relative à un contrôle du système de climatisation sélectionné, est modifiée par rotation de la molette 101 montée en rotation autour du sélecteur de contrôle 102.

Dans une étape 83, l'information modifiée est affichée sur l'écran 103.

Bien entendu, la présente invention ne se limite pas aux exemples de réalisation décrits ci-avant mais s'étend à tout dispositif selon la revendication indépendante.

La présente invention concerne également un véhicule, par exemple automobile ou plus généralement un véhicule autonome à moteur terrestre, comprenant le dispositif 100 de la figure 2.

## Revendications

1. Dispositif (100) de contrôle d'un système de climatisation d'un véhicule, comprenant :
- un sélecteur de contrôle (102) du système de climatisation comprenant plusieurs zones de sélection de contrôle par pression, chaque zone de sélection de contrôle étant associée à un contrôle du système de climatisation ;
- un écran numérique (103) configuré pour afficher une information relative à un contrôle du système de climatisation sélectionné par pression sur l'une des zones de sélection de contrôle du sélecteur de contrôle ;
- une molette (101) montée en rotation autour du sélecteur de contrôle et configurée pour qu'une rotation de la molette autour du sélecteur de contrôle modifie l'information relative au contrôle du système de climatisation sélectionné ;
- ladite information modifiée étant affichée sur l'écran.

2. Dispositif selon la revendication 1, dans lequel le sélecteur de contrôle, la molette et l'écran ont la forme d'anneaux circulaires et le sélecteur de contrôle, la molette et l'écran sont assemblés suivant un même axe passant par des centres desdits anneaux circulaires.

3. Dispositif selon la revendication 1 ou 2, dans lequel un diamètre extérieur de la molette est supérieur à un diamètre extérieur du sélecteur de contrôle, et le diamètre extérieur du sélecteur de contrôle est supérieur à un diamètre extérieur de l'écran.

4. Dispositif selon l'une des revendications précédentes, dans lequel l'écran est un écran à cristaux liquides.

5. Dispositif selon l'une des revendications précédentes, dans lequel un contrôle du système de climatisation est un des contrôles suivants :
- une sélection d'une consigne de température de l'air d'un habitacle du véhicule ;
- une sélection d'un niveau de puissance d'une climatisation automatique de l'air de l'habitacle du véhicule mise en œuvre par le système de climatisation du véhicule ;
- une activation/désactivation de la climatisation automatique de l'air de l'habitacle du véhicule ;
- une activation/désactivation d'un dégivrage d'un parebrise arrière du véhicule ;
- une activation/désactivation d'un recyclage de l'air intérieur de l'habitacle du véhicule sans apport d'air extérieur ;
- une activation/désactivation d'un dégivrage d'un parebrise avant du véhicule ;
- une sélection d'une zone de ventilation à l'intérieur de l'habitacle du véhicule ;
- une sélection d'un niveau de puissance de ventilation de l'air de l'habitacle du véhicule.

6. Dispositif selon l'une des revendications précédentes, dans lequel un indicateur lumineux est associé à chaque zone de sélection de contrôle du sélecteur de contrôle pour indiquer si un contrôle associé à ladite zone de sélection de contrôle est sélectionné.

7. Dispositif selon l'une des revendications précédentes, dans lequel plusieurs informations relatives à plusieurs contrôles sont affichées simultanément sur l'écran.

8. Système de climatisation d'un véhicule comprenant un dispositif selon l'une des revendications 1 à 7.

9. Procédé de contrôle d'un système de climatisation d'un véhicule mis en œuvre par un dispositif selon l'une des revendications 1 à 7, comprenant les étapes suivantes :
- sélection (81) d'un contrôle du système de climatisation par pression sur une zone du sélecteur de contrôle ;
- modification (82) d'une information relative à un contrôle du système de climatisation sélectionné, par rotation de la molette montée en rotation autour du sélecteur de contrôle ; et
- affichage (83) de ladite information modifiée sur l'écran.

10. Véhicule comprenant le dispositif selon l'une des revendications 1 à 7.

## Patentansprüche

1. Steuervorrichtung (100) für eine Klimaanlage in einem Fahrzeug, bestehend aus:
- einen Steuerungswähler (102) für die Klimaanlage mit mehreren Steuerungswählbereichen pro Druck, wobei jeder Steuerungswählbereich einer Steuerung der Klimaanlage zugeordnet ist;
- ein digitales Display (103), das so konfiguriert ist, dass es Informationen über eine Steuerung der ausgewählten Klimaanlage durch Druck auf einen der Steuerungsauswahlbereiche des Steuerungswählers anzeigt;
- ein Rad (101), das um den Steuerungswähler drehbar angebracht und so konfiguriert ist, dass eine Drehung des Rades um den Steuerungswähler die Steuerungsinformationen der ausgewählten Klimaanlage ändert;
- die geänderten Informationen werden auf dem Bildschirm angezeigt.

2. Vorrichtung nach Anspruch 1, bei der der Steuerwähler, das Rad und der Bildschirm die Form kreisförmiger Ringe haben und der Steuerwähler, das Rad und der Bildschirm entlang einer gleichen Achse zusammengefügt sind, die durch Zentren der kreisförmigen Ringe verläuft.

3. Vorrichtung nach Anspruch 1 oder 2, wobei ein Außendurchmesser des Rändchens größer als ein Außendurchmesser des Steuerwählers ist und der Außendurchmesser des Steuerwählers größer als ein Außendurchmesser des Schirms ist.

4. Vorrichtung nach einem der vorhergehenden Ansprüche, bei der der Schirm ein Flüssigkristallschirm ist.

5. Vorrichtung nach einem der vorhergehenden Ansprüche, bei der eine Steuerung der Klimaanlage eine der folgenden Steuerungen ist:
- Auswahl eines Sollwerts für die Lufttemperatur in einem Fahrzeuginnenraum;
- eine Auswahl des Leistungspegels einer automatischen Klimaanlage des Fahrzeuginnenraums, wie sie von der Klimaanlage des Fahrzeugs implementiert wird;
- Aktivierung/Deaktivierung der automatischen Klimatisierung des Fahrzeuginnenraums;
- Aktivierung/Deaktivierung der Entfrostung einer hinteren Windschutzscheibe des Fahrzeugs;
- Aktivierung/Deaktivierung einer Rückführung der Innenluft des Fahrzeuginnenraums ohne Zufuhr von Außenluft;
- Aktivierung/Deaktivierung der Entfrostung einer vorderen Windschutzscheibe des Fahrzeugs;
- eine Auswahl eines Lüftungsbereichs innerhalb des Fahrzeuginnenraums;
- eine Auswahl eines Niveaus der Lüftungsleistung des Fahrzeuginnenraums.

6. Vorrichtung nach einem der vorhergehenden Ansprüche, bei der jedem Steuerauswahlbereich des Steuerwählers ein Lichtindikator zugeordnet ist, um anzuzeigen, ob eine dem Steuerauswahlbereich zugeordnete Steuerung ausgewählt ist.

7. Vorrichtung nach einem der vorhergehenden Ansprüche, bei der mehrere Informationen über mehrere Steuerelemente gleichzeitig auf dem Bildschirm angezeigt werden.

8. Klimaanlage eines Fahrzeugs, die eine Vorrichtung nach einem der Ansprüche 1 bis 7 umfasst.

9. Verfahren zur Steuerung einer Klimaanlage eines Fahrzeugs, durchgeführt durch eine Vorrichtung nach einem der Ansprüche 1 bis 7, mit den folgenden Schritten:
- Auswahl (81) einer Steuerung der Klimaanlage über einen Bereich des Steuerungswählers;
- Änderung (82) einer Steuerungsinformation der ausgewählten Klimaanlage durch Drehen des drehbar um den Steuerungswähler montierten Rades und
- Anzeige (83) der geänderten Information auf dem Bildschirm.

10. Fahrzeug, das die Vorrichtung nach einem der Ansprüche 1 bis 7 umfasst.

## Claims

1. Device (100) for controlling an air conditioning system of a vehicle, comprising:
- an air conditioning system control selector (102) comprising a plurality of pressure control selection zones, each control selection zone being associated with an air conditioning system control;
- a digital display (103) configured to display information about a control of the selected air conditioning system by pressing one of the control selection zones of the control selector;
- a knob (101) rotatably mounted about the control selector and configured so that rotation of the knob about the control selector changes the control information of the selected air conditioning system;
- the modified information is displayed on the screen.

2. Device according to claim 1, wherein the control selector, the knob and the screen are in the shape of circular rings and the control selector, the knob and the screen are assembled along the same axis passing through compounds of said circular rings.

3. Device according to claim 1 or 2, wherein an outer diameter of the knob is greater than an outer diameter of the control selector, and the outer diameter of the control selector is greater than an outer diameter of the screen.

4. Device according to one of the previous claims, wherein the screen is a liquid crystal screen.

5. Device according to any of the previous claims, wherein a control of the air conditioning system is one of the following:
- a selection of an air temperature setpoint for a passenger compartment of the vehicle;
- a selection of a power level of an automatic vehicle passenger compartment air conditioning system implemented by the vehicle air conditioning system;
- an activation/deactivation of the automatic air conditioning system of the passenger compartment of the vehicle;
- activation/deactivation of a rear windscreen defrosting;
- an activation/deactivation of a recycling of the air inside the passenger compartment of the vehicle without the addition of outside air;
- activation/deactivation of a front windscreen defrost;
- a selection of a ventilation zone inside the passenger compartment of the vehicle;
- a selection of a vehicle cabin air ventilation power level.

6. Device according to one of the previous claims, wherein a light indicator is associated with each control selection zone of the control selector to indicate whether a control associated with said control selection zone is selected.

7. Device according to one of the previous claims, in which several items of information relating to several controls are displayed simultaneously on the screen.

8. Air conditioning system of a vehicle comprising a device according to any one of claims 1 to 7.

9. Method for controlling an air conditioning system of a vehicle implemented by a device according to any one of claims 1 to 7, comprising the steps of:
- selection (81) of a control of the air conditioning system by pressure on a zone of the control selector;
- modification (82) of a control information of the selected air conditioning system by rotating the knob mounted to rotate about the control selector; and
- display (83) of the modified information on the screen.

10. Vehicle comprising the device according to one of claims 1 to 7.
